# EUROPÄISCHE PATENTSCHRIFT

(11) **EP 2 895 769 B1**
(45) Veröffentlichungstag und Bekanntmachung des Hinweises auf die Patenterteilung: **31.08.2016**
(21) Anmeldenummer: 13783471.9
(22) Anmeldetag: 11.09.2013
(51) Int. Cl.: F16G 15/04

(54) **KETTENVERBINDUNGSELEMENT MIT SICHERUNGSSTEG**
CHAIN CONNECTING ELEMENT WITH SECURITY CONNECTOR PIECE
ÉLÉMENT DE LIAISON DE CHAÎNE À ENTRETOISE DE BLOCAGE

(30) Priorität: 11.09.2012 DE 202012103455 U
(43) Veröffentlichungstag der Anmeldung: 22.07.2015
(73) Patentinhaber: Thiele GmbH & Co. KG, 58640 Iserlohn (DE)
(72) Erfinder: BRODZIAK, Eugeniusz, 58640 Iserlohn (DE)
(74) Vertreter: Griepenstroh, Jörg
(86) Internationale Anmeldenummer: PCT/DE2013/100322
(87) Internationale Veröffentlichungsnummer: WO 2014/040589

(56) Entgegenhaltungen:
- WO-A2-00/31438
- DE-A1- 2 055 826
- DE-U1- 9 018 107
- DE-U1-202006 016 032

## Beschreibung

Die vorliegende Erfindung betrifft ein Kettenverbindungselement gemäß den Merkmalen im Oberbegriff von Anspruch 1.

Kettenverbindungsglieder kommen insbesondere für Hochleistungs-rundstahlketten zum Einsatz, wie sie im Untertage-Bergbau verwendet werden. Es ist bekannt, dass bei Kettenverbindungsgliedern in Kenter-Bauweise die Demontage nach dem Einsatz Schwierigkeiten bereiten kann, da der lange Spannstift in der die gegenüberliegenden Schenkel der beiden Gliedhälften und den Steg durchsetzenden in der Kettengliedebene schräg verlaufenden Bohrung festrostet. Außerdem wird der Spannstift ebenso wie der zwischen den Gliedhälften angeordnete Steg durch die Belastung der beiden Gliedhälften des Kettenverbindungsglieds auf Scherung beansprucht, was das Austreiben des Spannstifts aus der langen Bohrung zusätzlich erschwert. Hinzu kommt, dass zum Austreiben des Spannstifts ein langer Dorn erforderlich ist, der beim Austreibvorgang starken Biegebeanspruchungen ausgesetzt ist, denen er nur in begrenztem Maße standhalten kann.

Das aus der DE-PS 201 224 bekannte Kenterschloss wurde in unterschiedlichsten Ausführungsformen weiterentwickelt. In der Weiterentwicklung gemäß der DE 90 10 317 U wurde ein Kettenverbindungsglied, insbesondere für Hochleistungs-Rundstahlketten, vorgeschlagen, bei denen als Verriegelungselement eine Sperrkugel zum Einsatz kommt, die durch einen quer zur Kettengliedebene eingetriebenen Spannstift in ihrer Sperrlage fixierbar ist. Es kann ein relativ kurzer Spannstift verwendet werden, der, selbst wenn er in der Bohrung des Stegs festrosten sollte, leicht mit einem entsprechend biegesteifen kurzen Dorn aus dem Steg zur anderen Seite heraus getrieben werden kann. Dadurch wird sowohl die Montage als auch die Demontage vereinfacht. Nachteilig ist allerdings der erhöhte Fertigungsaufwand sowie die Tatsache, dass mit der Sperrkugel ein weiteres Bauteil erforderlich ist, wodurch die Teilevielfalt erhöht wird. Dieser Nachteil haftet auch dem in der DE 196 52 262 C2 offenbarten Kettenverbindungsglied an, bei welchem anstelle der Sperrkugel separate Riegelelemente zum Einsatz kommen, die über einen das Stegbauteil durchsetzenden Schwenkbolzen miteinander verbunden sind. Durch Verschwenken um 90° umgreifen die Riegelelemente Führungsflächen an den Schenkeln der Gliedbügel, so dass das Stegbauteil gegen Herausfallen aus dem Kettenverbindungsglied gesichert ist. Die Lagefixierung des Ringelements erfolgt durch einen parallel zur Schwenkachse eingetriebenen Sicherungsstift.

Weiterhin ist aus der DE 20 2006 016 032 U1 ein Kettenverbindungsglied gemäß dem Oberbegriff des Anspruchs 1 bekannt, bei dem zwei über ihre Schenkel gekoppelte Gliedbügel durch einen quer zwischen den Schenkeln der Gliedbügel eingeschobenen Steg verriegelt sind. Je nach Dimensionierung der Kette können diese und auch Gliedbügel bis zu mehreren Dutzend Kilogramm schwer sein, so dass sowohl bei der Montage des Kettenverbindungsglieds als auch bei der Demontage das Kettenverbindungsglied mitsamt der an beiden Seiten sich von dem Kettenverbindungsglied erstreckenden Kette angehoben und gedreht werden müssen, so dass der Steg ausgetrieben werden kann.

Aufgabe der vorliegenden Erfindung ist es daher, ein Kettenverbindungsglied bereitzustellen, das gegenüber aus dem Stand der Technik bekannten Kettenverbindungsgliedern einfacher verriegel- und entriegelbar ist.

Die zuvor genannte Aufgabe wird erfindungsgemäß mit einem Kettenverbindungselement gemäß den Merkmalen von Anspruch 1 gelöst.

Vorteilhafte Ausführungsvarianten der vorliegenden Erfindung sind Gegenstand der abhängigen Ansprüche.

Das erfindungsgemäße Kettenverbindungselement weist zwei über ihre Schenkel koppelbare Gliedbügel und einen quer zwischen den Schenkeln einschiebbaren Steg auf. Ein Schenkel jedes Gliedbügels weist wiederum einen Halsabschnitt sowie einen demgegenüber verdickten Zapfen auf, wobei an dem jeweils gegenüberliegenden anderen Schenkel hierzu korrespondierend eine Halsausnehmung und eine Zapfenausnehmung vorgesehen sind. Die zwei ineinander gesteckten Gliedbügel sind über den Steg verriegelbar. Das Kettenverbindungselement ist erfindungsgemäß dadurch gekennzeichnet, dass der Steg durch einen innenliegenden Verriegelungsbolzen, welcher an jedem seiner Enden einen Federzapfen aufweist, und aus zwei Lagerhülsen ausgebildet ist und dass der Steg spiegelsymmetrisch aufgebaut ist, wobei auf jeder Seite eine außenliegende Lagerhülse zum formschlüssigen Verriegelungseingriff in den Gliedbügeln kommt und ein Spannstift beidseitig in den Verriegelungsbolzen einschiebbar oder austreibbar ist und die Federzapfen jeweils in einer Lagerhülse formschlüssig fixiert sind.

Durch den erfindungsgemäßen Aufbau des Stegs ist es somit möglich, das Kettenverbindungselement unabhängig von dessen Einbauort oder aber Einbaulage beidseitig zu verriegeln oder aber auch zu entriegeln. Insbesondere nach Nutzung ist durch das Eindringen von Staub und Verschmutzungen der Spannstift innerhalb des Verriegelungsbolzens in seiner Bewegung zumindest teilweise blockiert, so dass dieser nur über einen Aushauer aus dem Verriegelungsbolzen ausgetrieben werden kann. Im Anschluss daran wird der Verriegelungsbolzen selber durch einen größeren Aushauer ebenfalls aus den Lagerhülsen ausgetrieben. Erfindungsgemäß ist es möglich, dieses unabhängig von der Seite des Kettenverbindungselements vorzunehmen. Zumeist ist immer eine Seite des Kettenverbindungselements von einem anwendenden Monteur leicht erreichbar, so dass er auf der dieser Seite gegenüberliegende Seite die entsprechenden Bauelemente austreiben kann und somit das Kettenverbindungselement lösen kann. Ein aufwendiges Drehen der Kette ist somit nicht erforderlich.

Je nach Einbaulage und Nutzung der Kette kann es sein, dass diese derart unter Spannung steht, dass ein mit aus dem Stand der Technik bekannten Verriegelungsmitteln verriegeltes Kettenverbindungselement nicht oder nur bedingt drehbar ist, so dass es unter Umständen dazu kam, dass die Verriegelungsmittel, insbesondere ein Steg, gar nicht aus dem Verbindungselement austreibbar war und mithin das Verbindungselement durch Zerstörung, beispielsweise Aufflexen, geöffnet werden musste. Dies wird durch die Möglichkeit, das Verriegelungsmittel beidseitig auszutreiben sowie aber auch zunächst einzutreiben, verhindert.

Weiterhin bevorzugt sind die Lagerhülsen gegenüber einer Außenmantelfläche abstehend an einem außenseitigen Ende mit einem Fasenabsatz versehen, wobei der Fasenabsatz formschlüssig an den Gliedbügeln zur Anlage kommt. Bei Einsetzen der erfindungsgemäßen Lagerhülsen werden somit die Gliedbügel an der jeweiligen Seite durch den Fasenabsatz formschlüssig umgriffen und verriegelt. Ein axiales Spiel in Richtung des Verriegelungsbolzens wird somit verhindert. Besonders bevorzugt kommt der Fasenabsatz in einer Ausnehmung der Gliedbügel zur Aufnahme, so dass eine Außenseite des Fasenabsatzes plan mit der Außenseite der Gliedbügel abschließt. Hierdurch kommt es nicht zu einer Beschädigung des Verriegelungsmittels in Form des Stegs oder aber zu einem Verhaken oder Hängenbleiben des Gliedbügels bei Passieren von Umlenkrädern, Zahnrädern oder aber Gleitschienen.

Zur Verbesserung der Einführbarkeit in die zwei ineinandergesetzten Gliedbügel ist jede Lagerhülse an einer Innenseite auf ihrer Außenmantelfläche abgeflacht. Somit wird zunächst das Einführen der Lagerhülse in die Gliedbügel und das weitere Einschieben bzw. Eintreiben erleichtert.

Im verriegelten Zustand kommen die Innenseiten beider Lagerhülsen formschlüssig stirnseitig zur Anlage. Hierdurch wird zum einen die Verriegelung der Gliedbügel durch die zwei Lagerhülsen im Wesentlichen durch den Querschnitt des gesamten Kettenverbindungselements ermöglicht, zum anderen wird ein axiales Spiel in Verbindung mit dem endseitigen Fasenabsatz verhindert. Ein Ausschlagen oder aber Lockern des Kettenverbindungselements und insbesondere des zur Verriegelung eingesetzten Stegs wird somit selbst bei intensiver und mehrjähriger Benutzung vermieden.

Damit insbesondere das spiegelsymmetrische Einsetzen des zur Verriegelung eingesetzten erfindungsgemäßen Steges ermöglicht wird, weist der Verriegelungsbolzen einen mittig angeordneten Zentrierzylinder auf, wobei von dem Zentrierzylinder sich jeweils abstehend, einstückig und werkstoffeinheitlich Federzapfen erstrecken. Hierdurch wird es ermöglicht, zunächst den Verriegelungsbolzen mit einer Lagerhülse zusammenzusetzen und dann die Lagerhülse mitsamt des Verriegelungsbolzens in die zwei ineinandergesteckten Gliedbügel einzuführen und mit der weiteren Lagerhülse zu verriegeln. Alternativ ist auch zunächst ein Einsetzen einer Lagerhülse möglich, die dann durch Einführung der zweiten Lagerhülse mit dem Verriegelungsbolzen eine vollständige Verriegelung über den Steg herbeiführt. Sobald die jeweiligen Federzapfen in den Lagerhülsen formschlüssig zur Anlage kommen, ist bereits eine Vorsicherung, insbesondere eine Montagesicherung, gegeben, so dass eine Lagerhülse nach vollständigem Einsetzen des zur Verriegelung genutzten Stegs nicht unbeabsichtigt aus den Gliedbügeln herausfällt.

Während des eigentlichen Einsatzes des Kettenverbindungselements wirken Zugkräfte von bis zu mehreren hundert und sogar tausend Newton auf das Kettenverbindungselement und mithin auch zumindest teilweise auf den Steg, wobei der Steg in sich verkanten kann. Der Verriegelungsbolzen ist hohl ausgebildet, wobei ein Spannstift in den Verriegelungsbolzen beidseitig eintreibbar oder aber austreibbar ist. Wahlweise ist der Spannstift auf jeder Seite eintreibbar.

Im Rahmen der Erfindung kann jedoch auch ein zweigeteilter Spannstift eingesetzt werden, wobei dann von jeder Seite ein Spannstift eingetrieben wird oder aber alternativ zunächst der Verriegelungsbolzen mit einer Lagerhülse zusammengesteckt wird und über eine Spannstifthälfte fest verriegelt wird. Der zweite Spannstift wird dann nach Aufsetzen der zweiten Lagerhülse zum Verriegeln der zwei Gliedbügel zueinander eingesetzt.

Weiterhin bevorzugt weist jeder Federzapfen mindestens zwei Federzungen auf, wobei an den Enden der Federzungen eine Rastnase ausgebildet ist. Die einzelnen Federzungen sind dann über einen Trennschlitz miteinander derart beweglich ausgebildet, dass ein Einführen in eine Lagerhülse ermöglicht wird und aufgrund der Rastnasen ein Einrasten bzw. Schnappen bei Erreichen der gewünschten Verriegelungsposition erfolgt. Durch anschließendes Eintreiben des Spannstifts wird in Verbindung mit der Rastnase ein derartiger Formschluss erzeugt, dass ein unbeabsichtigtes oder aber alleiniges Lösen nicht ermöglicht wird.

Zum vereinfachten Einführen der Rastnasen sind diese an einer Außenseite abgeflacht, wobei eine Einführöffnung der Lagerhülse in ihrem Durchmesser vergrößert ausgebildet ist. Ferner weisen zum vereinfachten Einführen des Spannstifts die Federzungen selbst wiederum einen Innendurchmesser auf, der zu dem Ende der Federzunge hin vergrößert ausgebildet ist. Somit ist es zum einen einfacher, den Spannstift selbst anzusetzen und einzutreiben, im Falle eines Austreibens des Spannstifts ist es für einen Aushauer wiederum aufgrund des sich zum Ende hin vergrößernden Innendurchmessers einfacher, den Aushauer in die Öffnung einzusetzen.

Im Rahmen der Erfindung ist das Kettenverbindungselement insbesondere aus einem metallischen Werkstoff ausgebildet. Ebenfalls ist der Steg, sowie die gesamten zuvor beschriebenen zum Steg gehörenden Bauteile, aus einem metallischen Werkstoff ausgebildet. Insbesondere kommt ein Stahlwerkstoff zum Einsatz. Für den Verriegelungsbolzen, aber auch für den Spannstift selber, wird insbesondere ein Federstahl verwendet. Die einzelnen Komponenten können zumindest partiell vergütet, insbesondere gehärtet und/oder geschmiedet, sein.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1A-1F: ein aus dem Stand der Technik bekanntes Kettenverbindungselement;
- Figur 2A-2F: ein aus dem Stand der Technik bekanntes Kettenverbindungselement;
- Figur 3A-3F: ein aus dem Stand der Technik bekanntes Kettenverbindungselement;
- Figur 4: ein aus dem Stand der Technik bekanntes Kettenverbindungselement;
- Figur 5: ein aus dem Stand der Technik bekanntes Kettenverbindungselement;
- Figur 6a, b: einen erfindungsgemäßen Steg in einer perspektivischen Ansicht und Schnittansicht;
- Figur 7a, b: den erfindungsgemäßen Steg in einer Seitenansicht und Querschnittsansicht;
- Figur 8: den erfindungsgemäßen Steg in einer Stirnansicht und
- Figur: 9a, b eine erfindungsgemäße Lagerhülse und einen erfindungsgemäßen Verriegelungsbolzen jeweils in einer perspektivischen Ansicht.

In den Figuren werden für gleiche oder ähnliche Bauteile dieselben Bezugszeichen verwendet, auch wenn eine wiederholte Beschreibung aus Vereinfachungsgründen entfällt.

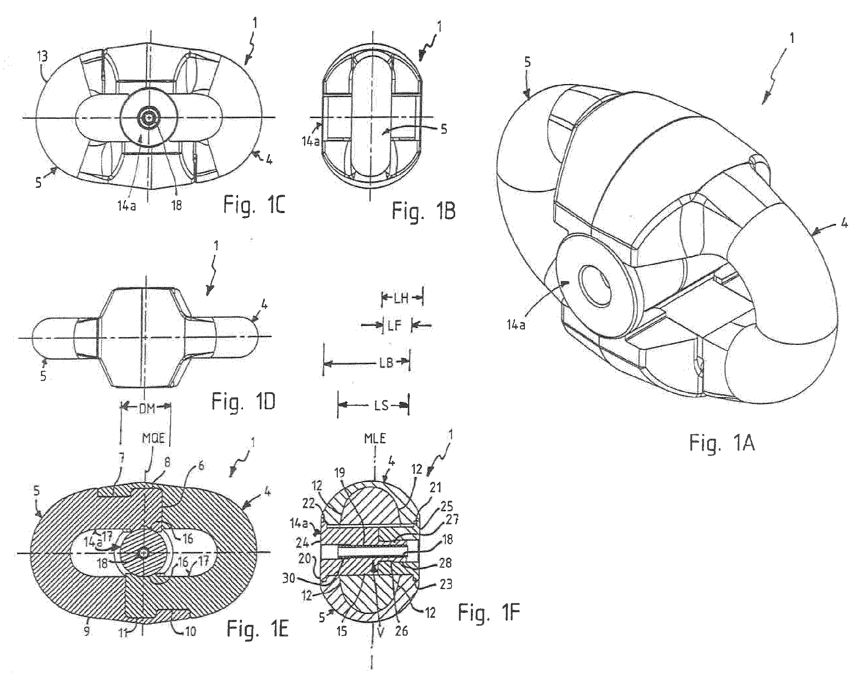

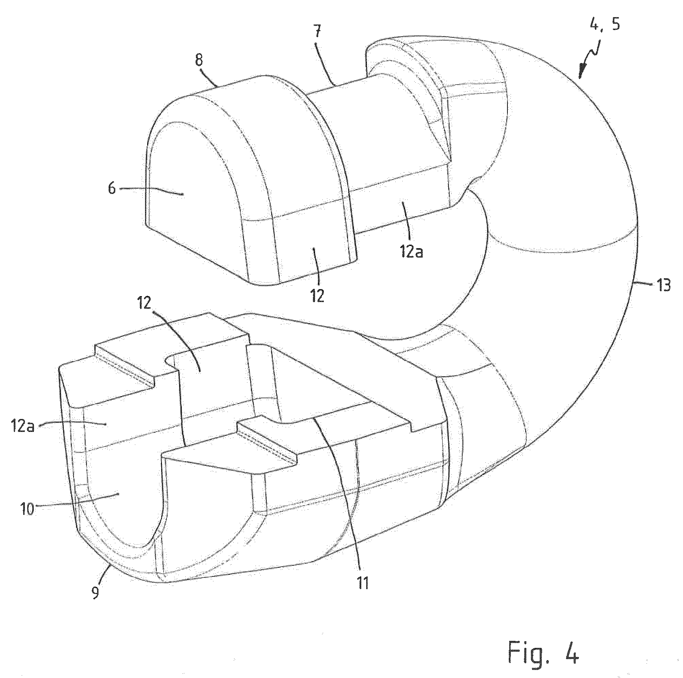

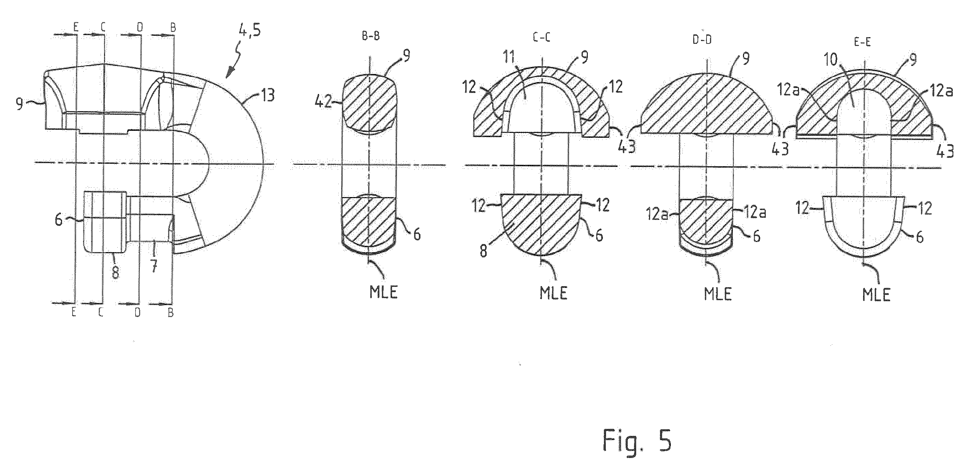

Jedes Kettenverbindungsglied 1 - 3 der Figuren 1a bis 3f weist zwei gleiche, über ihre Schenkel gekuppelte Gliedbügel 4, 5 auf, die in allen Figuren identisch ausgeführt sind. Ein Schenkel 6 jedes Gliedbügels 4, 5 weist dann einen Halsabschnitt 7 sowie einen demgegenüber verdickten Zapfen 8 auf. Am anderen Schenkel 9 des Gliedbügels 4, 5 sind korrespondierend eine Halsausnehmung 10 und eine Zapfenausnehmung 11 vorgesehen. Erfindungsgemäß sind an jedem Zapfen 8 sowie an jeder Zapfenausnehmung 11 bezüglich der vertikalen Mittellängsebene MLE der Zapfen 8 konisch ausgebildete Flankenflächen 12 vorgesehen (vgl. auch Figur 4 und Figur 5). Diese Länge L der Schenkel 6 ist weiterhin so bemessen, dass die Mittelquerebene MQE des Kettenverbindungsglieds 1 - 3 die Zapfen 8 schneidet.

Die Gliedbügel 4, 5 sind aus einem geeigneten Stahlwerkstoff durch Schmieden hergestellt und weisen im Bügelabschnitt 13 einen ovalen bis kreisförmigen Querschnitt auf. In bekannter Weise können die Gliedbügel 4, 5 wechselseitig in nicht näher dargestellte Endglieder zweier Kettenstränge eingefädelt werden.

Zur Kupplung der Gliedbügel 4, 5 werden diese ineinander gesteckt und dann durch einen quer zwischen die Schenkel 6, 9 der Gliedbügel 4, 5 geschobenen Steg 14a - 14c verriegelt. Der Steg 14a - 14c weist einen zylindrischen Mittelabschnitt 15 auf, dessen Durchmesser DM an Führungsnuten 16 in den Innenseiten 17 der Schenkel 6, 9 angepasst ist. Der Steg 14a - 14c ist durch einen Sicherungsstift 18 gesichert, welcher in eine Bohrung 19, 19a im oder am Steg 14a - 14c einführbar ist. Die Länge LS des Sicherungsstifts 18 ist jeweils kürzer als die Länge LB der Bohrung 19, 19a. Endseitig weist der Steg 14 a-14c über den Durchmesser DM des Mittelabschnitts 15 nach außen vorstehende Axialausziehsicherungen 20, 21 auf, die formschlüssig in Ausnehmungen 22, 23 an jeweils einem Schenkel 6, 9 der Gliedbügel 4, 5 anliegen. In den Figuren 1a bis 1f bis Figur 3a bis 3f sind drei Ausführungsformen des Steges 14a - 14c dargestellt, deren Unterschiede nachfolgend beschrieben werden.

In der Ausführungsform der Figuren 1a bis 1f ist der Steg durch einen Bolzen 24 und eine Hülse 25 gebildet, wobei die Hülse 25 auf einen axialen Federzapfen 26 des Bolzens 24 formschlüssig gesteckt ist. Der Federzapfen 26 ist längsgeschlitzt, weist umfangsseitig eine Stufe 27 auf, welche in eine Bundstufe 28 eingreift, die in einer Bohrung 29 der Hülse 25 vorgesehen ist. Die Länge LF des Federzapfens 26 ist kürzer als die Länge LH der Hülse 25 und der Sicherungsstift 18 ist in die Axialbohrung 19 des Bolzens 24 geschlagen. Die Axialbohrung 19 des Bolzens 24 weist einen Absatz 30 auf, wodurch das Einschlagen und Ausschlagen des Sicherungsstifts 18 erleichtert wird.

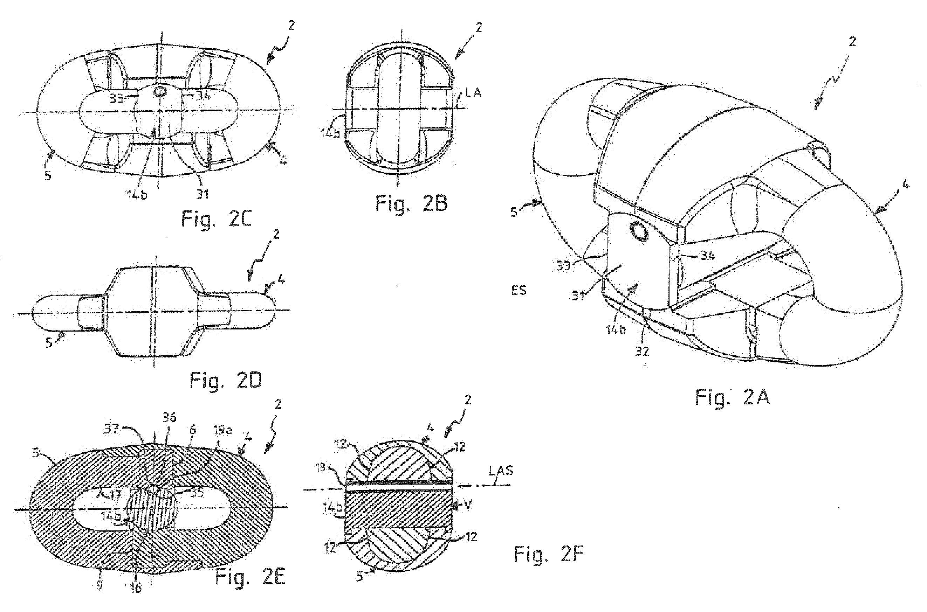

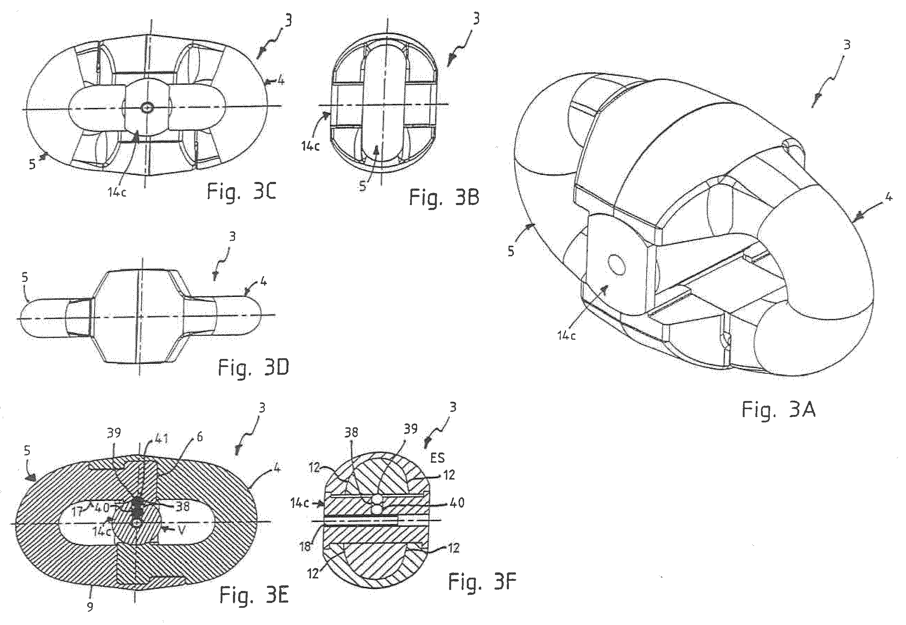

Der Steg 14b, 14c der Ausführungsformen der Figuren 2a bis 2f und Figuren 3a bis 3f ist einstückig ausgeführt. An einem Ende 31 ist die Axialausziehsicherung 32 an zwei parallelen Seiten 33, 34 abgeflacht. Der Steg 14b, 14c kann auf diese Weise durch eine Drehung um 90° um die Längsachse LA von einer nicht näher dargestellten Ausgangsstellung in eine Eingriffstellung ES verlagert werden. Der Steg 14b, 14c ist in der Eingriffsstellung ES durch den die Drehbewegung des Stegs 14b, 14c gegenüber den Schenkeln 6, 9 blockierenden Sicherungsstift 18 in der Eingriffstellung ES festlegbar.

In der Ausführungsform der Figuren 2a bis 2f liegt der Sicherungsstift 18 mit einem ersten Teilumfangsbereich 35 am Steg 14b und mit einem zweiten Teilumfangsbereich 36 in einer Vertiefung 37 an der Innenseite 17 der Schenkel 6, 9 an. Die Längsachse LAS des Sicherungsstiftes 18 verläuft hierbei parallel zur Längsachse LA der Führungsnuten 16.

In der Ausführungsform der Figuren 3a bis 3f weist der Steg 14c eine mittlere Querbohrung 38 auf. In der Querbohrung 38 sind wenigstens zwei miteinander in Kontakt stehende Sperrkörper 39, 40 angeordnet. Wie man in den Figuren 3e und f erkennen kann, handelt es sich bei den Sperrkörpern 39, 40 um Kugeln aus Stahl. Die Sperrkörper 39, 40 sind durch den Sicherungsstift 18 in eine Eingriffstellung ES verlagerbar. In der Eingriffstellung ES liegt ein Sperrkörper 39 in der Vertiefung 41 an der Innenseite 17 eines Schenkels 6 an.

In der Figur 5 ist der Gliedbügel 4, 5 in einer Seitenansicht dargestellt. Rechts davon sind vier Querschnittsdarstellungen gezeichnet, die entlang der Linien B-B, C-C, D-D und E-E in der Seitenansicht verlaufen. Man erkennt im Schnitt B-B, dass der Schenkel 9 in diesem Abschnitt einen im Wesentlichen quadratischen Querschnitt mit nach außen gewölbten Seitenflächen 42 hat. Im Schnitt C-C ist der Zapfen 8 und die Zapfenausnehmung 11 zu erkennen. Die Flankenflächen 12 des Zapfens 8 und der Zapfenausnehmung 11 sind gegenüber der vertikalen Mittellängsebene MLE der Zapfen 8 konisch ausgebildet. Der Schenkel 9 ist im Bereich der Zapfenausnehmung 11 stark verbreitert und weist parallele Seitenflächen 43 auf. Im Schnitt D-D fällt auf, dass die Flankenflächen 12a im Bereich des Halses 7 parallel gegenüber der vertikalen Mittellängsebene MLE des Zapfens 8 ausgeführt sind. Gleiches gilt für die ebenfalls parallelen Flankenflächen 12a der Halsausnehmung 10, die in Schnitt E-E dargestellt ist.

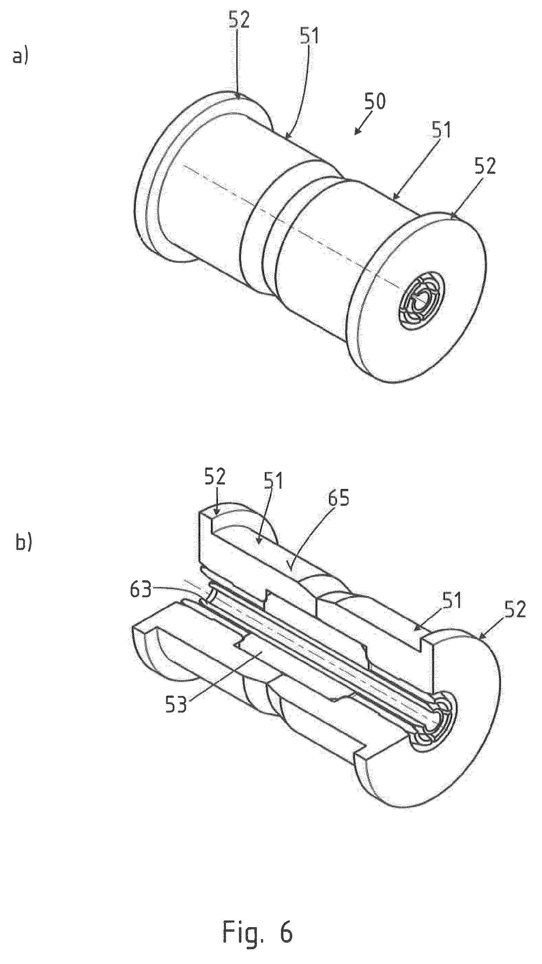

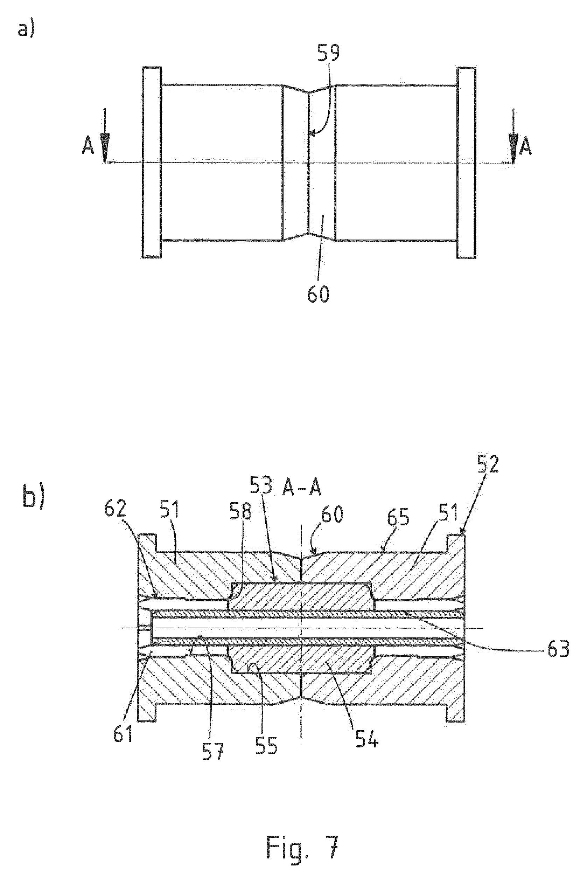

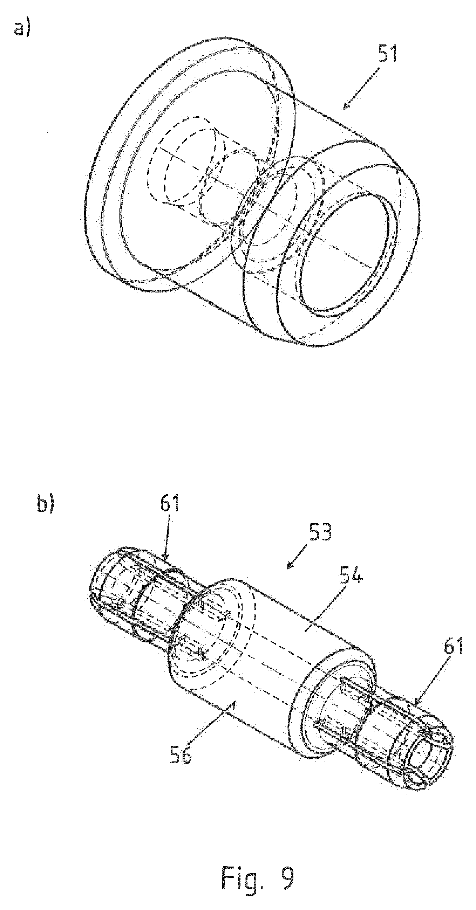

Figur 6a und b zeigen einen erfindungsgemäßen Steg 50 in einer perspektivischen Ansicht sowie in einer perspektivischen Teilschnittansicht. Zu erkennen ist in Figur 6a der spiegelsymmetrische Aufbau des Stegs 50 bestehend aus zwei Lagerhülsen 51. Jeweils endseitig an den Lagerhülsen 51 sind Fasenabsätze 52 ausgebildet, wobei die Fasenabsätze 52 gemäß Figur 1a seitig an den Gliedbügeln 4, 5 im verriegelten Zustand des Stegs 50 zur Anlage kommen und gegenüber einer Außenmantelfläche 65 in Radialrichtung abstehen. Figur 6b zeigt die perspektivische Ansicht in einem Teilschnitt, wobei wiederum die zwei Lagerhülsen 51 mit ihren Fasenabsätzen 52 zu erkennen sind. Im Inneren der Lagerhülsen 51 ist ein Verriegelungsbolzen 53 angeordnet, wobei der Verriegelungsbolzen 53 ebenfalls in Figur 7b und 9b gut ersichtlich dargestellt ist. Der Verriegelungsbolzen 53 selber weist einen mittig angeordneten Zentrierzylinder 54 auf, der in einer jeweiligen Zentrierzylinderaufnahme 55 der Lagerhülsen 51 mit seiner Außenmantelfläche 56 formschlüssig zur Anlage kommt. Die Zentrierzylinderaufnahme 55 der Lagerhülsen 51 geht dann Richtung Ende der Lagerhülsen 51 über in eine Federzapfenaufnahme 57, wobei ein Übergang mit einer abgerundeten Kante 58 ausgebildet ist, so dass bei einem Zusammenstecken von Verriegelungsbolzen 53 und Lagerhülsen 51 ein Verkanten vermieden ist.

Ebenfalls in Figur 7a dargestellt weisen die Lagerhülsen 51 im montierten Zustand jeweils an ihrer Innenseite 59 eine Abflachung 60 auf, so dass ein einfaches Einführen in die Gliedbügel 4, 5 ermöglicht wird.

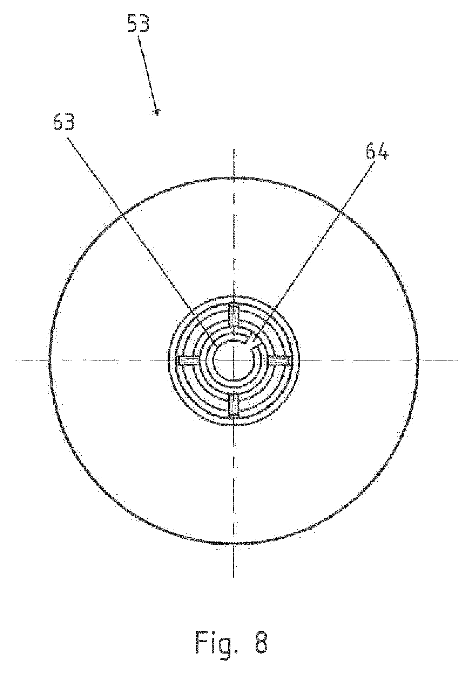

Gegenüber dem Lagerzapfen selbst überstehend sind die Federzapfen 61 angeordnet, die dann gemäß Figur 7b in der Federzapfenaufnahme 57 formschlüssig über eine Rastnase 62 in der Federzapfenaufnahme 57 verriegeln. Da somit ein ungewolltes Herausziehen, mithin ein Zusammendrücken der Rastnasen 62, in Radialrichtung vermieden wird, ist ferner in den Verriegelungsbolzen 53 ein Spannstift 63 eingesetzt, wobei der Spannstift 63 gemäß Figur 8 einen Längsschlitz 64 aufweist, so dass dieser radial aufweitbar oder aber komprimierbar ist. Erfindungsgemäß ist der Spannstift 63 beidseitig, insbesondere gut zu erkennen in Figur 7b, in den erfindungsgemäßen Steg 50 einsetzbar oder aber aus diesem austreibbar. Gleiches gilt für den Verriegelungsbolzen 53 selber. Auch dieser ist beidseitig aus dem erfindungsgemäßen Steg 50 mit der jeweiligen Lagerhülse 51 austreibbar.

### Bezugszeichen:

- 1 -: Kettenverbindungsglied
- 2 -: Kettenverbindungsglied
- 3 -: Kettenverbindungsglied
- 4 -: Gliedbügel
- 5 -: Gliedbügel
- 6 -: Schenkel
- 7 -: Halsabschnitt
- 8 -: Zapfen
- 9 -: Schenkel
- 10 -: Halsausnehmung
- 11 -: Zapfenausnehmung
- 12 -: Flankenfläche von 8, 11
- 13 -: Flankenfläche von 7, 10
- 14a -: Steg
- 14b -: Steg
- 14c -: Steg
- 15 -: Mittelabschnitt
- 16 -: Führungsnut
- 17 -: Innenseite
- 18 -: Sicherungsstift
- 19 -: Bohrung
- 19a -: Bohrung
- 20 -: Axialausziehsicherung
- 21 -: Axialausziehsicherung
- 22 -: Ausnehmung
- 23 -: Ausnehmung
- 24 -: Bolzen
- 25 -: Hülse
- 26 -: Federzapfen
- 27 -: Stufe
- 28 -: Bundstufe
- 29 -: Bohrung
- 30 -: Absatz
- 31 -: Ende von 14b, 14c
- 32 -: Axialausziehsicherung
- 33 -: Seite von 32
- 34 -: Seite von 32
- 35 -: Teilumfangsbereich von 18
- 36 -: Teilumfangsbereich von 18
- 37 -: Vertiefung
- 38 -: Querbohrung
- 39 -: Sperrkörper
- 40 -: Sperrkörper
- 41 -: Vertiefung
- 42 -: Seitenfläche
- 43 -: Seitenfläche
- 50 -: Steg
- 51 -: Lagerhülse
- 52 -: Fasenabsatz
- 53 -: Verriegelungsbolzen
- 54 -: Zentrierzylinder
- 55 -: Zentrierzylinderaufnahme
- 56 -: Außenmantelfläche zu 54
- 57 -: Federzapfenaufnahme
- 58 -: abgerundete Kante
- 59 -: Innenseite
- 60 -: Abflachung
- 61 -: Federzapfen
- 62 -: Rastnase
- 63 -: Spannstift
- 64 -: Längsschlitz zu 63
- 65 -: Außenmantelfläche zu 51

- DM -: Durchmesser von 15
- ES -: Eingriffstellung
- LA -: Längsachse von 14a - 14c
- LAS -: Längsachse von 18
- LB -: Länge von 19
- LF -: Länge von 26
- LH -: Länge von 25
- LS -: Länge von 18
- MLE -: Mittellängsebene
- MQE -: Mittelquerebene
- V -: Verriegelung

## Patentansprüche

1. Kettenverbindungselement (1), welches zwei über ihre Schenkel (6) koppelbare Gliedbügel (4, 5) und einen quer zwischen die Schenkel (9) einschiebbaren Steg (50) aufweist, wobei ein Schenkel (9) jedes Gliedbügels (4, 5) einen Halsabschnitt (7) sowie einen demgegenüber verdickten Zapfen (8) aufweist und an dem diesen gegenüberliegenden anderen Schenkel (9) hierzu korrespondierend eine Halsausnehmung (10) und eine Zapfenausnehmung (11) vorgesehen sind, wobei die zwei ineinandergesteckten Gliedbügel (5) durch den Steg (50) verriegelbar sind, **dadurch gekennzeichnet, dass** der Steg (50) durch einen innenliegenden Verriegelungsbolzen (53), welcher an jedem seiner Enden einen Federzapfen (61) aufweist, und zwei Lagerhülsen (51) ausgebildet ist und dass der Steg (50) spiegelsymmetrisch aufgebaut ist, wobei auf jeder Seite eine außenliegende Lagerhülse (51) zum formschlüssigen Verriegelungseingriff in den Gliedbügeln (4, 5) kommt und ein Spannstift (63) beidseitig in den Verriegelungsbolzen (53) einschiebbar oder austreibbar ist und die Federzapfen (61) jeweils in einer Lagerhülse (51) formschlüssig fixiert.

2. Kettenverbindungselement nach Anspruch 1, **dadurch gekennzeichnet, dass** die Lagerhülsen (51) gegenüber einer Außenmantelfläche (65) in Radialrichtung abstehend an einem außenseitigen Ende einen Fasenabsatz (52) aufweisen, wobei der Fasenabsatz (52) formschlüssig an den Gliedbügeln (4, 5) zur Anlage kommt, insbesondere ist der Fasenabsatz (52) in einer Ausnehmung (22, 23) der Gliedbügel (4, 5) aufgenommen, so dass eine Außenseite des Fasenabsatzes (52) plan mit der Außenseite der Gliedbügel (5) abschließt.

3. Kettenverbindungselement nach Anspruch 1 oder 2, **dadurch gekennzeichnet, dass** jede Lagerhülse (51) an einer Innenseite (59) auf der Außenmantelfläche (56) abgeflacht ist.

4. Kettenverbindungselement nach einem der Ansprüche 1 bis 3, **dadurch gekennzeichnet, dass** in verriegeltem Zustand die Innenseiten (59) beider Lagerhülsen (51) formschlüssig stirnseitig aneinanderliegen.

5. Kettenverbindungselement nach einem der Ansprüche 1 bis 4, **dadurch gekennzeichnet, dass** der Verriegelungsbolzen (53) einen mittig angeordneten Zentrierzylinder (54) aufweist, wobei von dem Zentrierzylinder (54) sich abstehend einstückig Federzapfen (61) erstrecken.

6. Kettenverbindungselement nach einem der Ansprüche 1 bis 5, **dadurch gekennzeichnet, dass** der Verriegelungsbolzen (53) hohl ausgebildet ist, wobei ein Spannstift (63) in den Verriegelungsbolzen (53) beidseitig eintreibbar oder austreibbar ist.

7. Kettenverbindungselement nach einem der Ansprüche 1 bis 6, **dadurch gekennzeichnet, dass** jeder Federzapfen (26) mindestens zwei Federzungen aufweist, wobei an den Enden der Federzungen eine Rastnase (62) ausgebildet ist.

8. Kettenverbindungselement nach Anspruch 7, **dadurch gekennzeichnet, dass** die Rastnasen auf einer Außenseite abgeflacht ausgebildet sind.

9. Kettenverbindungselement nach einem der Ansprüche 7 oder 8, **dadurch gekennzeichnet, dass** die Federzungen einen Innendurchmesser aufweisen, der zu dem Ende der Federzungen hin vergrößert ausgebildet ist.

## Claims

1. Chain connecting element (1), comprising two link brackets (4, 5) couplable via limbs (6) thereof, and a crosspiece(50) configured for transverse insertion between the limbs (9), wherein one limb (9) of each link bracket(4, 5) comprises a neck portion (7) and in relation thereto a thickened journal (8), and the other, opposing limb (9) has a complementary neck recess (10) and journal recess (11), wherein the two engaging link brackets (5)are lockable by the crosspiece (50), **characterized in that** the crosspiece (50) is formed of an inner locking bolt (53) having a spring journal (61) on each end, and two bearing sleeves (51), and the crosspiece (50) is of mirror-symmetrical construction, wherein on each side an outer bearing sleeve (51) is provided for form-fitting engagement in the link brackets (4, 5), and a clamping pin (63) configured for insertion into or extraction from the locking bolt (53) is provided to form-fittingly secure each spring journal (61) in a respective bearing sleeve (51).

2. Chain connecting element according to claim 1, **characterized in that** the bearing sleeves (51) have an external surface area (65) and an external end face formed with a chamfered shoulder (52)protruding in radial direction in relation to the external surface area (65), said chamfered shoulder (52) abutting the link brackets (4, 5) in a form-fitting manner, in particular the chamfered shoulder (52) being incorporated into a recess (22, 23) of the link brackets (4, 5) such that an external surface of the chamfered shoulder (52) ends flush with the external surface of the link brackets (5).

3. Chain connecting element according to claim 1 or 2, **characterized in that** each of the bearing sleeves (51) has an external surface area (56) which is flattened at an inner wall (59) of the bearing sleeve.

4. Chain connecting element according to any of claims 1 to 3, **characterized in that**, in a locked position, the inner surfaces (59) of both bearing sleeves (51) abut end-to-end in a form-fitting manner.

5. Chain connecting element according to any of claims 1 to 4, **characterized in that** the locking bolt (53) comprises a central centering cylinder (54), wherein spring journals (61) formed in one piece are configured to protrude from the centering cylinder (54).

6. Chain connecting element according to any of claims 1 to 5, **characterized in that** the locking bolt (53) is of hollow construction, wherein a clamping pin (63) can be inserted into or extracted from either side of the locking bolt (53).

7. Chain connecting element according to any of claims 1 to 6, **characterized in that** each spring journal (26) has at least two spring tongues, wherein the ends of the spring tongues are formed into a detent (62).

8. Chain connecting element according to claim 7, **characterized in that** the external surfaces of the detents are flattened.

9. Chain connecting element according to any of claims 7 or 8, **characterized in that** the spring tongues have an inner diameter which increases towards the end of the spring tongues.

## Revendications

1. Élément de liaison de chaîne (1), qui comporte deux étriers de maillon (4, 5) pouvant être couplés par l'intermédiaire de leurs branches (6) et un étai (50) pouvant être inséré transversalement entre les branches (9), une branche (9) de chaque étrier de maillon (4, 5) comportant une partie de collet (7) ainsi qu'un tenon (8) épaissi par rapport à la partie de collet et un évidement de collet (10) ainsi qu'un évidement de tenon (11) étant prévus de manière correspondante sur l'autre branche (9) opposée, les deux étriers de maillon (5) enfoncés l'un dans l'autre pouvant être bloqués par l'étai (50), **caractérisé en ce que** l'étai (50) est formé par un axe de blocage (53) qui est situé à l'intérieur et qui comporte un tenon à ressort (61) à chacune de ses extrémités et par deux manchons de logement (51) et **en ce que** l'étai (50) est conçu symétrique, un manchon de logement (51) situé à l'extérieur venant de chaque côté dans les étriers de maillon (4, 5) pour un blocage par concordance de forme et une goupille de serrage (63) pouvant être insérée ou sortie des deux côtés dans l'axe de blocage (53) et fixant par concordance de forme les tenons à ressort (61) dans un manchon de logement (51) à chaque fois.

2. Élément de liaison de chaîne selon la revendication 1, **caractérisé en ce que** les manchons de logement (51) comportent sur une extrémité côté extérieur un décrochement biseauté (52) s'écartant de façon radiale par rapport à une surface enveloppante extérieure (65), le décrochement biseauté (52) venant en appui avec concordance de forme contre les étriers de maillon (4, 5), le décrochement biseauté (52) étant logé notamment dans un évidement (22, 23) des étriers de maillon (4, 5) de telle sorte qu'un côté extérieur du décrochement biseauté (52) se termine dans un alignement plan avec le côté extérieur de l'étrier de maillon (5).

3. Élément de liaison de chaîne selon la revendication 1 ou 2, **caractérisé en ce que** chaque manchon de logement (51) est aplati sur un côté intérieur (59) au niveau de la surface enveloppante extérieure (56).

4. Élément de liaison de chaîne selon l'une des revendications 1 à 3, **caractérisé en ce que**, à l'état bloqué, les côtés intérieurs (59) des deux manchons de logement (51) sont adjacents de manière frontale avec concordance de forme.

5. Élément de liaison de chaîne selon l'une des revendications 1 à 4, **caractérisé en ce que** l'axe de blocage (53) comporte un cylindre de centrage (54) agencé au milieu, des tenons à ressort (61) d'une seule pièce s'étendant en s'écartant à partir du cylindre de centrage (54).

6. Élément de liaison de chaîne selon l'une des revendications 1 à 5, **caractérisé en ce que** l'axe de blocage (53) est conçu creux, une goupille de serrage (63) pouvant être introduite ou sortie des deux côtés dans l'axe de blocage (53).

7. Élément de liaison de chaîne selon l'une des revendications 1 à 6, **caractérisé en ce que** chaque tenon à ressort (26) comporte au moins deux languettes élastiques, un taquet d'arrêt (62) étant conçu aux extrémités des languettes élastiques.

8. Élément de liaison de chaîne selon la revendication 7, **caractérisé en ce que** les taquets d'arrêt sont conçus aplatis sur un côté extérieur.

9. Élément de liaison de chaîne selon l'une des revendications 7 ou 8, **caractérisé en ce que** les languettes élastiques ont un diamètre intérieur qui est conçu agrandi en direction de l'extrémité des languettes élastiques.
